# EUROPEAN PATENT APPLICATION

(11) **EP 1 342 404 A2**
(43) Date of publication of application: **10.09.2003**
(21) Application number: 03251329.3
(22) Date of filing: 05.03.2003
(51) Int. Cl.: A01G 9/12, A01G 17/12

(54) **Device for supporting plants**

(30) Priority: 06.03.2002 GB 0205238
(71) Applicant: Cooper, Robert, Swadlincote, Derbyshire DE12 8ED (GB)
(72) Inventor: Cooper, Robert, Swadlincote, Derbyshire DE12 8ED (GB)
(74) Representative: Watkins, Rosalind Philippa

(57) **Abstract**

A device 10 for use in supporting plants includes a clamp member 12 and a holding member 14 together with a fixing arrangement 16 for drawing the clamp member 12 and the holding member 14 towards one another such that the two members may be clamped around and to a support member such as a post or garden cane 22. The holding member 14 includes means for attaching a plant restraining member 46 thereto such that when the device 10 is clamped to a support member and spaced from the ground, the plant restraining member 46 may restrain and support an upright plant.

## Description

The invention relates to a device for use in supporting plants.

There is often a requirement to support plants, in particular tall herbaceous plants or young growing plants, such as trees. A range of supports are available for this purpose but most are relatively unwieldy and inflexible. The supports are generally difficult to adjust as plants grow.

According to the invention there is provided a device for use in supporting plants, the device including:
a clamp member and a holding member;
fixing means for drawing the clamp member and the holding member towards on another, such that the two members may be clamped around and to an elongate upright support member;
   wherein the holding member includes means for attaching a plant restraining member thereto;
such that when the device is clamped to a support member, and spaced from the ground, the plant restraining member may restrain and support an upright plant.

The fixing means is preferably releasable such that the clamp member and the holding member may be removably attached to the upright support member. Preferably the fixing means is adjustable so that the tightness of the clamping force clamping the two members onto the upright support member may be adjusted. Preferably the fixing means may be loosened such that the device may be moved up and down the upright support member.

The fixing means may include one or more threaded fasteners. Preferably the fixing means includes at least two threaded fasteners, one located on each side of the upright support member in use. Each threaded fastener may include a threaded bolt and a wing nut, rotation of the wing nut effecting tightening/loosening of the fastener.

The holding member may include a first part adapted to lie against the support member in use and a second part orientated at an angle of between 70° and 110° to the first part. Preferably the first and second parts are approximately planar. Preferably the first and second parts are oriented substantially at right angles to one another, the holding member being generally "L" shaped in section. The second part may include an upper surface which is substantially parallel to the length of the upright support member in use.

The clamp member may be generally parallel to the first part of the holding member in use, spaced therefrom by a distance generally equivalent to a diameter of the upright support member.

The means for attaching a plant restraining member to the holding member may include means for releasably attaching an elongate plant restraining member thereto. The elongate plant restraining member may include a wire. The means for attaching the plant restraining member to the holding member may include one or more attachment members, each including means for gripping the plant restraining member, to attach it to the holding member. Each attachment member may include an orifice for receiving a part of an elongate plant restraining member and gripping that part. Alternatively or additionally the attachment member may include means for gripping the elongate plant restraining member between itself and a surface of the holding member. Each attachment member may be adapted to receive an elongate wire. The device may include two attachment members, each adapted to receive an end of an elongate wire.

An embodiment of the invention will be described for the purpose of illustration only with reference to the accompanying drawings, in which:
Fig. 1 is a diagrammatic perspective view of a first embodiment of the invention;
Fig. 2 is a diagrammatic perspective view of a second embodiment of the invention:
Figs. 3a and 3b are diagrammatic perspective views from different orientations of a third embodiment of the invention;
Fig. 4 is a diagrammatic perspective view of a fourth embodiment of the invention;
Fig. 5 is a diagrammatic perspective view of a fifth embodiment of the invention; and
Fig. 6 is a diagrammatic perspective view of a sixth embodiment of the invention.

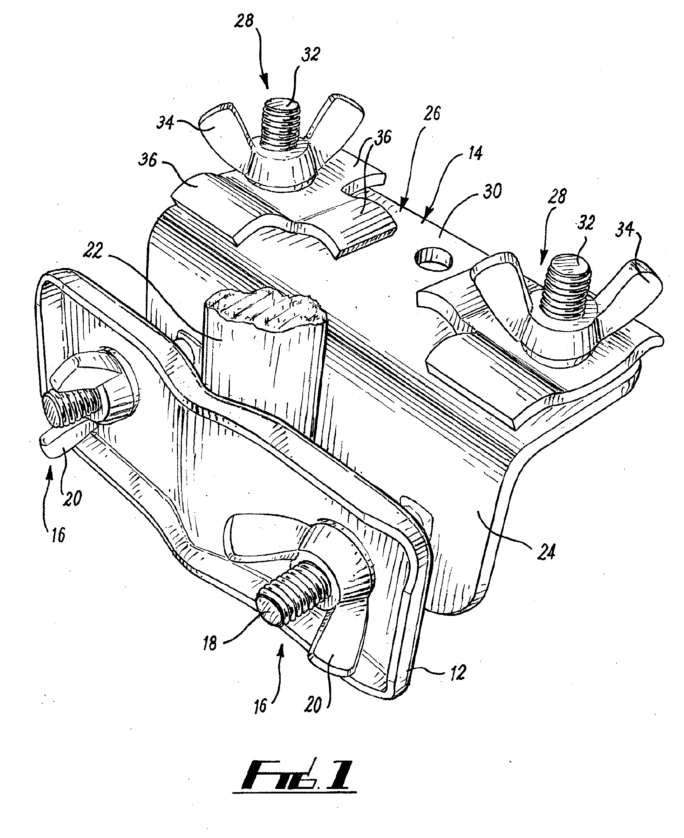

Referring to Fig. 1, there is illustrated a device 10 for use in supporting plants. The device 10 includes a clamp member 12 and a holding member 14. The clamp member 12 and holding member 14 are attached to one another by two fixing arrangements 16. Each fixing arrangement 16 includes an elongate threaded bolt 18 and a complementary wing nut 20 threaded onto the bolt. Each wing nut 20 may be rotated manually to move it up and down the length of the bolt 18. It may be seen that tightening of the wing nuts 20 draws together the clamp member 12 and holding member 14, thereby clamping the device 10 firmly onto an upright support member in the form of, in the illustration in Fig. 1, a garden cane 22.

The holding member 14 includes a first part 24, which in use lies generally against the garden cane 22. The holding member 14 includes a second part 26 which is oriented generally perpendicularly to the first part 24 and which therefore lies generally perpendicular to the length of the garden cane 22. The first and second parts 24, 26 of the holding member are each generally planar.

The holding member 14 is provided with two attachment members 28 located on an upper surface 30 of the second part 26 of the holding member 14. Each attachment member 28 is held in place by a bolt 32 and a wing nut 34. The bolt 32 passes through a hole (not visible in Fig. 1) in the second part 26 of the holding member 14. The wing nut 34 may be rotated to adjust how tightly the attachment member 26 is held against the upper surface 30 of the second part of the holding member 14.

It may be seen that each attachment member 28 includes three arms 36 extending from a central portion 38. Each arm curves slightly upwards in a mid region thereof, defining a small arch between the upper surface 30 of the second part 26 of the holding member and a lower surface of each arm 36. The arch shaped recesses are adapted to receive an elongate part of a plant restraining member (not illustrated in Fig. 1).

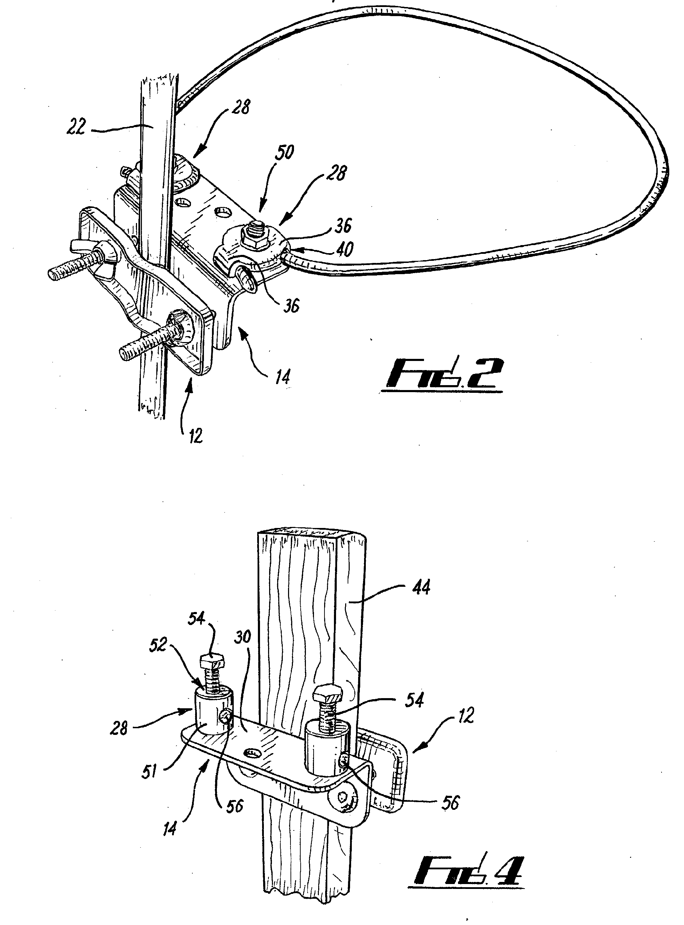

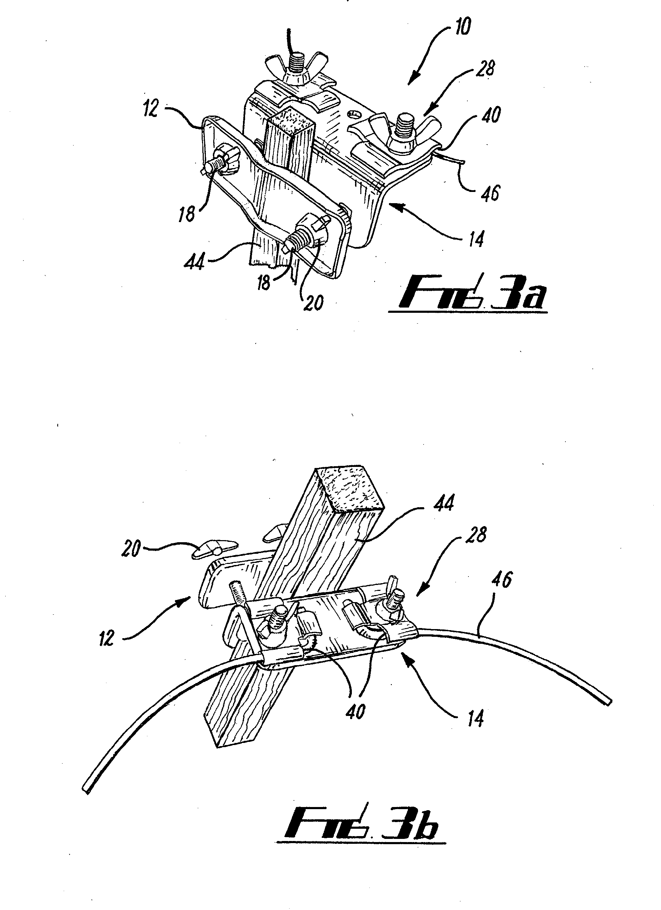

Figs. 3a and 3b illustrate a device 10 very similar to that of Fig. 1, except that, whereas the wing nuts 20 of Fig. 1 are made of galvanised steel, the wing nuts 20 of Figs. 3a and 3b are made of a plastics material. In addition, the device 10 in Figs. 3a and 3b is seen attached to a square section garden post 44.

In Figs. 3a and 3b, an elongate plant restraining member in the form of a wire 46 is illustrated. It may be seen that each end of the wire 46 is threaded under two of the arch shaped recesses 40 defined by the attachment members 28.

In use, the clamp member and holding member 12 and 14 are initially detached from one another by manipulation of the wing nuts 20. The clamp member and holding member 12 and 14 may then be positioned on opposite sides of an elongate upright supporting member such as a garden cane 22 or garden post 44, illustrated in Figs. 1 and 3a/3b respectively. The wing nuts 20 may then be screwed onto the bolts 18 and tightened to clamp the device around the garden cane or garden post. The wire 46 may then be threaded under the arch shaped recesses 40 in any desired orientation and the wing nuts 34 tightened to clamp the wire 40 firmly in place. A loop of wire may then surround and support a plant. The loop of wire is illustrated in Fig. 2, which shows a different embodiment of the invention.

Referring to Fig. 2, in this embodiment the clamp member 12 and holding member 14 are as in the Fig. 1 embodiment. However, the attachment members 28 in this embodiment are of a slightly different shape including two opposite arms 36, each defining arch shaped recesses 40, the overall shape of the attachment members being rounded. In this embodiment an end of a wire 46 may be looped around the attachment member 28, being clamped against the holding member 14 by manipulation of a nut and bolt 50.

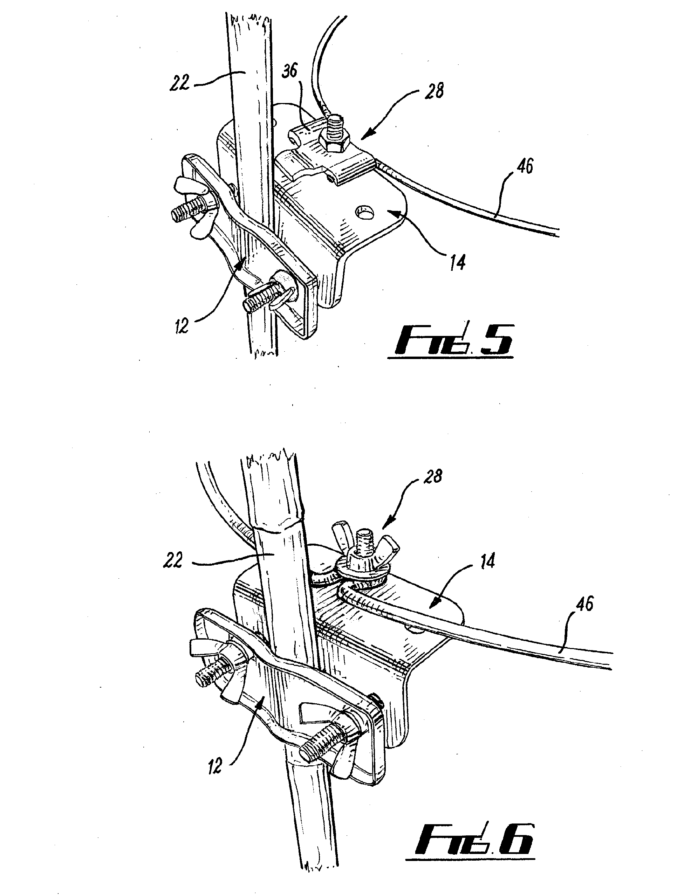

Referring to Fig. 4, in this embodiment the attachment members 28 each include a generally cylindrical body 51 attached to the upper surface 30 of the holding member 14. The cylindrical body 51 is provided with a central, axial, threaded hole 52, into which is threaded a complementary bolt 54. The body 50 is further provided with a diametrically extending orifice 56 extending therethrough. An end of a wire may be inserted into the orifice 54 and the nut tightened within the hole 52 onto the wire, in order to clamp the wire in place. In other respects this embodiment is similar to the previously described embodiments.

The embodiment of Fig. 5 is again generally similar to the previous embodiments, except that there is a single attachment member 28, adapted to clamp against both ends of a wire 46, the respective ends being clamped by respective arms 36.

In the embodiment of Fig. 6, a single central attachment member 28 is able to clamp against a part of a generally circular wire 46, such as a frame salvaged from an old hanging basket.

The device of the invention may be used to provide support for any upright plant. The device is particularly applicable for tall herbaceous plants or for young plants which need support by growing. In contrast from prior art arrangements, as a plant grows, the device may easily be moved up its support member in order to follow the growth of the plant.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A device (10) for use in supporting plants, the device including:
a clamp member (12) and a holding member (14);
fixing means (16) for drawing the clamp member and the holding member towards one another, such that the two members may be clamped around and to an elongate upright support member;
wherein the holding member (14) includes means for attaching a plant restraining member (46) thereto;
such that when the device is clamped to a support member (22), and spaced from the ground, the plant restraining member (46) may restrain and support an upright plant.

2. A device according to claim 1 wherein the fixing means (16) is releasable such that the clamp member and the holding member may be removably attached to the upright support member.

3. A device according to claim 2 wherein the fixing means (16) is adjustable so that the tightness of the clamping force clamping the two members onto the upright support member (22) may be adjusted and wherein the fixing means (16) may be loosened such that the device may be moved up and down the upright support member (22).

4. A device according to claim 5 wherein the fixing means (16) includes at least two threaded fasteners, one located on each side of the upright support member in use, each threaded fastener (16) including a threaded bolt and a wing nut, rotation of the wing nut effecting tightening/loosening of the fastener.

5. A device (10) according to any preceding claim wherein the holding member (14) includes a first part (24) adapted to lie against the support member in use and a second part (26) orientated at an angle of between 70° and 110° to the first part.

6. A device according to claim 5 wherein the first and second parts are approximately planar and are oriented substantially at right angles to one another, the holding member (14) being generally "L" shaped in section, and the second part including an upper surface which is substantially parallel to the length of the upright support member in use.

7. A device according to claim 6 wherein the clamp member (12) is generally parallel to the first part of the holding member in use, spaced therefrom by a distance generally equivalent to a diameter of the upright support member.

8. A device according to any preceding claim wherein the means for attaching a plant restraining member to the holding member includes means for releasably attaching an elongate plant restraining member thereto, and wherein the means for attaching the plant restraining member to the holding member includes one or more attachment members (28), each including means for gripping the plant restraining member, to attach it to the holding member.

9. A device according to claim 8 wherein each attachment member (28) includes an orifice for receiving a part of an elongate plant restraining member and gripping that part.

10. A device according to claim 8 or claim 9 wherein the attachment member may include means for gripping the elongate plant restraining member between itself and a surface of the holding member.

11. A device according to claim 10 wherein the device includes two attachment members (28), each adapted to receive an end of an elongate wire.

12. Any novel subject matter or combination including novel subject matter disclosed herein, whether or not within the scope of or relating to the same invention as any of the preceding claims.
